# EUROPEAN PATENT APPLICATION

(11) **EP 3 018 858 A1**
(43) Date of publication of application: **11.05.2016**
(21) Application number: 15193252.2
(22) Date of filing: 05.11.2015
(51) Int. Cl.: H04L 5/00, H04W 24/10

(54) **DEVICE OF HANDLING MEASUREMENT SIGNAL ON UNLICENSED CARRIER**

(30) Priority: 06.11.2014 US 201462075891 P; 04.11.2015 US 201514932925
(71) Applicant: HTC Corporation, Taoyuan City 330 (TW)
(72) Inventor: WU, Chih-Yao, 330, Taoyuan District, Taoyuan City (TW); YE, Shiang-Rung, 330, Taoyuan District, Taoyuan City (TW)
(74) Representative: Wagner, Karl H.

(57) **Abstract**

A communication device comprisesa storage unit for storing instructions and a processing means coupled to the storage unit. The processing means is configured to execute the instructions stored in the storage unit. The instructions comprise receiving a bitmap in at least one downlink (DL) control information (DCI) on at least one licensed carrier from a network; anddetermining whether to perform a radio resource management (RRM) measurement, a time/frequency synchronization and/or an automatic gain control (AGC) setting by utilizingat least one measurement signal in at least one subframe on at least one unlicensed carrier according to the bitmap.

## Description

### Cross Reference To Related Applications

This application claims the benefit of U.S. Provisional Application No. 62/075,891, filed on Nov. 6, 2014 and incorporated herein by reference.

### Background of the Invention

### 1. Field of the Invention

The present invention relates to a communication device used in a wireless communication system, and more particularly, to a communication device of handling a measurement signal on an unlicensed carrier in a wireless communication system.

### 2. Description of the Prior Art

A long-term evolution (LTE) system supporting the3rd Generation Partnership Project (3GPP) Rel-8 standard and/or the 3GPP Rel-9 standard are developed by the 3GPPas a successor of the universal mobile telecommunication system (UMTS) for further enhancing performance of the UMTS to satisfy increasing needs of users. The LTE system includes a new radio interface and a new radio network architecture that provides high data rate, low latency, packet optimization, and improved system capacity and coverage. In the LTE system, a radio access network known as an evolved universal terrestrial radio access network (E-UTRAN) includes at least one evolved Node-B (eNB) for communicating with at least one user equipment (UE), and for communicating with a core network including a mobility management entity (MME), a serving gateway, etc., for Non-Access Stratum (NAS) control.

A LTE-advanced (LTE-A) system, as its name implies, is an evolution of the LTE system. The LTE-A system targets faster switching between power states, improves performance at the coverage edge of an eNB, increases peak data rate and throughput, and includes advanced techniques, such as carrier aggregation (CA), coordinated multipoint(CoMP)transmissions/reception, uplink (UL) multiple-input multiple-output (UL-MIMO), licensed-assisted access (LAA) using LTE, etc. For a UE and an eNB to communicate with each other in the LTE-A system, the UE and the eNB must support standards developed for the LTE-A system, such as the 3GPP Rel-10 standard or later versions.

Network operators propose to offload network traffic of the LTE/LTE-A system to an unlicensed band, to ease load of the network traffic. For example, the eNB may provide services to the UE via the unlicensed band. However, resource in the unlicensed band is not always available, and it is not easy for the eNB to allocate the resource in the unlicensed band. The operations in the unlicensed band are even more complicated, when the UE operates in both a licensed band and the unlicensed band.

In the unlicensed band, an eNB needs to contend for a channel access. As a result, a transmission of a measurement signal scheduled on a channel may be muted to avoid interference to another transmission node which currently occupies the channel. Although a discovery reference signal (DRS) defined in the 3GPP Rel-12(e.g., for small cell enhancement) occurs with a lower frequency (e.g., period can be greater than 40ms), the transmission of the DRS may last up to 5ms which is large compared with the potential maximum occupied time in the unlicensed band (e.g., 4ms).Accordingly, the transmission of the DRS can result severe interference.

Thus, how to handle the measurement signal on the unlicensed carrier is an important problem to be solved.

### Summary of the Invention

The present invention therefore provides devices for handling a measurement signal on an unlicensed carrier to solve the abovementioned problem.

A communication device comprisesa storage unit for storing instructions and a processing means coupled to the storage unit. The processing means is configured to execute the instructions stored in the storage unit. The instructions comprise receiving a bitmap in at least one downlink (DL) control information (DCI) on at least one licensed carrier from a network; and determining whether to perform a radio resource management (RRM) measurement, a time/frequency synchronization and/or an automatic gain control (AGC) setting by utilizingat least one measurement signal in at least one subframe on at least one unlicensed carrier according to the bitmap.

A networkcomprisesa storage unit for storing instructions and a processing means coupled to the storage unit. The processing means is configured to execute the instructions stored in the storage unit. The instructions comprise determining whether to transmit at least one measurement signal in at least one subframe on at least one unlicensed carrier to a communication device;generatinga bitmap according to the determination; and transmitting the bitmap in at least one downlink (DL) control information (DCI) on at least one licensed carrier to the communication device.

These and other objectives of the present invention will no doubt become obvious to those of ordinary skill in the art after reading the following detailed description of the preferred embodiment that is illustrated in the various figures and drawings.

### Brief Description of the Drawings

Fig. 1 is a schematic diagram of a wireless communication system according to an example of the present invention.
Fig. 2 is a schematic diagram of a communication device according to an example of the present invention.
Fig. 3 is a flowchart of a process according to an example of the present invention.
Fig. 4 is a flowchart of a process according to an example of the present invention.

### Detailed Description

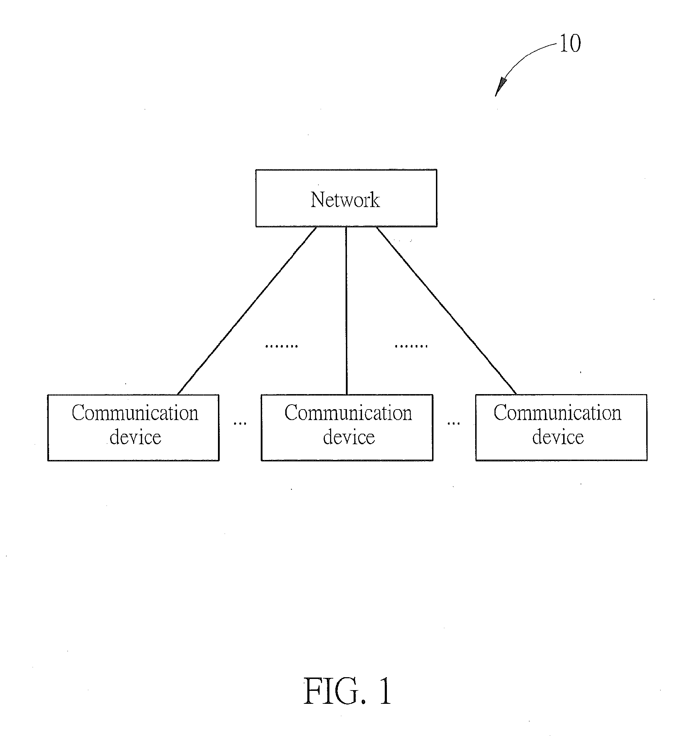

Please refer to Fig. 1, which is a schematic diagram of a wireless communication system 10 according to an example of the present invention. The wireless communication system 10 is briefly composed of a network and a plurality of communication devices. The network and a communication device may communicate with each other via one or more carriers of licensed band (s) and/or unlicensed band (s). The network and the communication device may simultaneously communicate with each other via multiple cells (e.g., multiple carriers) including a primary cell (e.g., primary component carrier (CC)) and one or more secondary cells (e.g., secondary component carriers). The abovementioned cells may be operated in the same or different duplexing modes, i.e. frequency-division duplexing (FDD) and time-division duplexing (TDD).

In Fig. 1, the network and the communication devices are simply utilized for illustrating the structure of the wireless communication system 10. Practically,the network may be anevolved UTRAN(E-UTRAN) including at least one evolved NB (eNB) and/or at least one relay in a long term evolution (LTE) system, a LTE-Advanced (LTE-A) system or an evolution of the LTE-A system. The eNB or the relay may be termed as a base station.

Acommunication devicemay be a user equipment (UE), a low cost device (e.g., machine type communication (MTC) device), a device-to-device (D2D) device, a mobile phone, a laptop, a tablet computer, an electronic book, a portable computer system, a vehicle, or combination thereof. In addition, the network and the communication device can be seen as a transmitter or a receiver according to direction (i.e., transmission direction), e.g., for an uplink (UL), the communication device is the transmitter and the network is the receiver, and for a downlink (DL), the network is the transmitter and the communication device is the receiver.

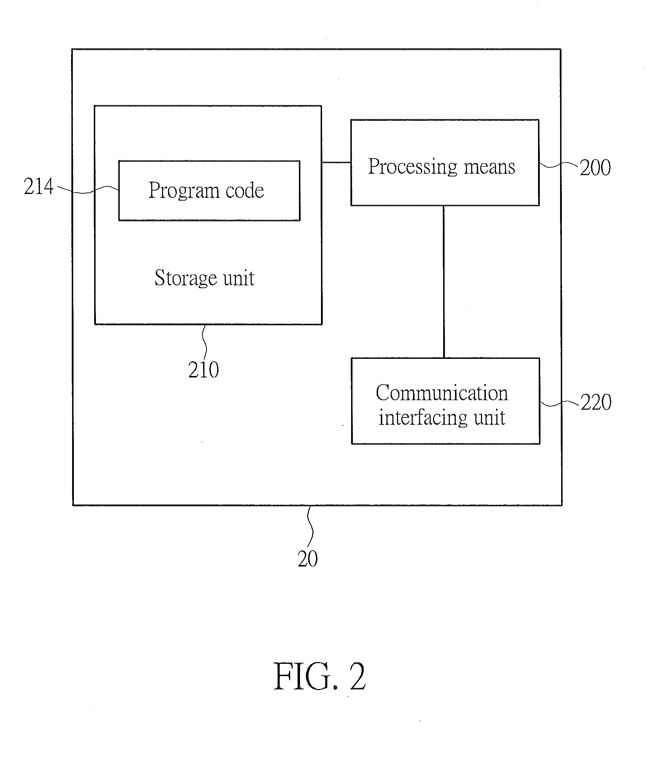

Fig. 2 is a schematic diagram of a communication device 20 according to an example of the present invention. The communication device 20 may be a communication deviceor the network shown in Fig. 1, but is not limited herein. The communication device 20 may include a processing means 200 such as a microprocessor or Application Specific Integrated Circuit (ASIC), a storage unit 210 and a communication interfacing unit 220. The storage unit 210 may be any data storage device that may store a program code 214, accessed and executed by the processing means 200. Examples of the storage unit 210 include but are not limited to a subscriber identity module (SIM), read-only memory (ROM), flash memory, random-access memory (RAM), Compact Disc Read-Only Memory (CD-ROM),digital versatile disc-ROM (DVD-ROM), Blu-ray Disc-ROM (BD-ROM), magnetic tape, hard disk, optical data storage device, non-volatile storage unit, non-transitory computer-readable medium (e.g., tangible media), etc. The communication interfacing unit 220 is preferably a transceiver and is used to transmit and receive signals (e.g., data, messages and/or packets) according to processing results of the processing means 200.

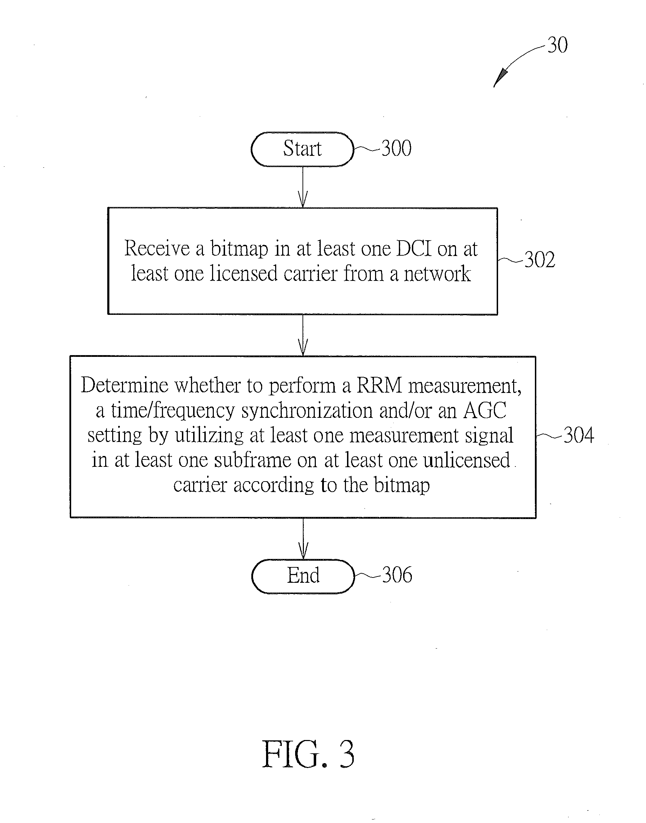

Fig. 3 is a flowchart of a process 30 according to an example of the present invention. The process 30 may be utilized in acommunication device (e.g., UE) in Fig. 1, to handle a measurement signal on an unlicensed carrier. The process 30 may be compiled into the program code 214 and includes the following steps:

Step 300: Start.

Step 302: Receive a bitmap in at least one DL control information (DCI) on at least one licensed carrierfrom a network.

Step 304: Determine whether to perform a radio resource management (RRM) measurement, a time/frequency synchronization and/or an automatic gain control (AGC) setting by utilizingat least one measurement signal in at least one subframe on at least one unlicensed carrier according to the bitmap.

Step 306: End.

According to the process 30, the communication device may receive a bitmap in at least one DL control information (DCI) (e.g., in a physical DL control channel (PDCCH)) on at least one licensed carrierfrom a network (e.g., eNB). Then, the communication device may determine whether to perform a RRM measurement, a time/frequency synchronization and/or an AGC setting by utilizingat least one measurement signal in at least one subframe on at least one unlicensed carrier according to the bitmap.That is, whether the above communication operation(s) related to the measurement signal(s) should be performed is determined based on the bitmap. In other words, the network may indicate the communication device whether the above communication operation(s) should be performed.Thus, the ambiguity of the communication operation(s) related to the measurement signal(s)on the unlicensed carrier is solved.

Realization of the process 30 is not limited to the above description.

In one example, the communication device in the process 30 may determine to perform the RRM measurement, the time/frequency synchronization and/or the AGC setting in one of the at least one subframe on the at least one unlicensed carrier, if a corresponding bit of the bitmap is 1. Otherwise, the communication device may determine not to perform the RRM measurement, the time/frequency synchronization and/or the AGC setting. In one example, the communication device may perform a blind detection for a set of the at least one measurement signal in the at least one subframe, if at least one corresponding bit of the bitmap is 1. Otherwise, the communication device may skip the blind detection the set of the at least one measurement signal. In one example, a set of bits from left to right in the bitmap may correspond to a set of unlicensed carriers with ascendingcell index order.In one example, a length of the bitmap and a number of the at least one unlicensed carrier may be the same. In one example, the communication device may detect the at least one DCI in at least one common search space of at least one PDCCH of the at least one licensed carrier.

In one example, the communication device in the process 30 may detect the at least one DCI in a first subframe of the at least one subframe of the at least one licensed carrier.In one example, the at least one unlicensed carrier and the at least one licensed carrier may be synchronized.In one example, the at least one DCI may bescrambled by a new Radio Network Temporary Identifier (RNTI) specific for a License Assisted Access (LAA). In one example, a length of the at least one DCI and a length of DCI format 1C may be the same. Further, a zero-padding operation may be performed on the at least one DCI so thatthe length of the at least one DCI and the length of the DCI format 1C maybe the same.In one example, the at least one measurement signal may include at least one discovery signal.In one example, the at least one subframe may beconfigured by a discovery signal-based measurement time configuration (DMTC) via a radio resource control (RRC) message.

In one example, the at least one measurement signal in the process 30 may be in part of the at least one subframe. In one example, the at least one measurement signal may include at least one reference signal with a plurality of types. The reference signal(s) may include a primary synchronization signal (PSS), a secondary synchronization signal (SSS), a cell-specific RS (CRS), and/or a channel state information (CSI) RS (CSI-RS). In one example, the communication device may expect to detect the at least one DCI in all or part of the at least one subframes. In one example, the communication devicemay be guaranteed to detect measurement signal(s) in a subframe, if a corresponding bit 1 in bitmap in the same subframe is detected.In one example, the communication device may receive at least one position of the at least one subframe on one of the at least one unlicensed carrier in a RRC signaling.In one example, the at least one position of the at least one subframe may be the same for all the at least one unlicensed carrier.In one example, the at least one subframe may include six consecutive subframes.

In one example, the communication devicemay determine not to perform the RRM measurement, if the communication device does not successfully receive/decode a PDCCH for transmitting the at least one DCI. In one example, the communication devicemay detect a PDCCH for transmitting the at least one DCI in the at least one subframe and to determine to perform the RRM measurement according to the bitmap in the PDCCH, if the communication device has not obtained measurement result(s) for a period of time configured by the network or for a predetermined time period. In one example, for a secondary cell (SCell) on an unlicensed carrier, the communication devicemay receive a SCell index of the SCell anda allocated bit location in the bitmap via RRC message(s) (e.g., RRCConnectionReconfiguration) from the network.In one example, the communication devicemaydetect a PDCCH for transmitting the at least one DCIin the at least one subframe and determine to perform the RRM measurement according to the bitmap in the PDCCH for a deactivated SCell, if the communication device has not obtained measurement result(s) for a period of timeconfigured by the network or for a predetermined time period.In one example, the at least one measurement signal may be transmitted periodically.

It should be noted that although the examples are illustrated based on the process 30, to clarify the operations of the base station. The examples can be combined and/or modified arbitrarily according to system requirements and/or design considerations.

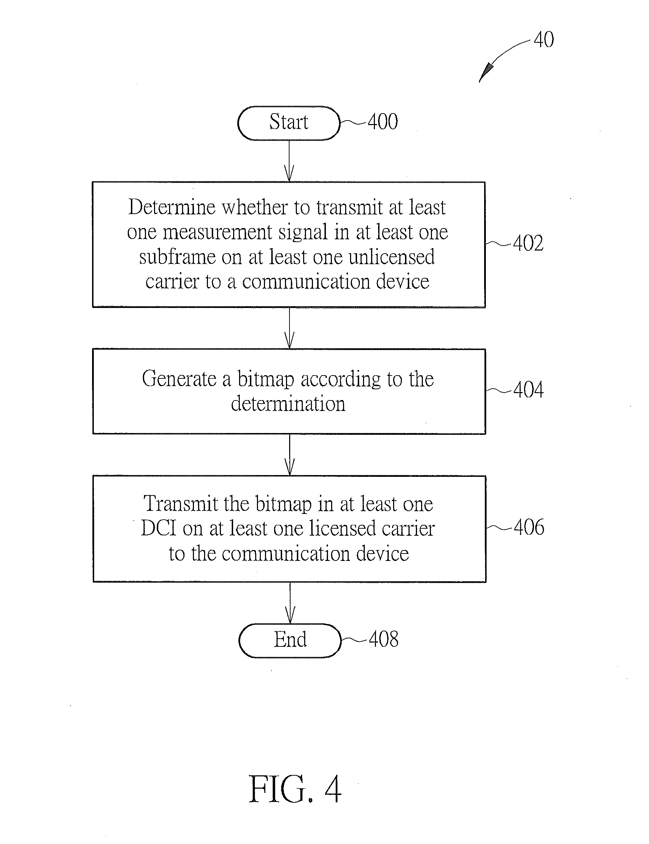

Fig. 4 is a flowchart of a process 40 according to an example of the present invention. The process 40 may be utilized in the network (e.g., eNB) in Fig. 1, to handle a measurement signal on an unlicensed carrier. The process 40 may be compiled into the program code 214 and includes the following steps:

Step 400: Start.

Step 402: Determine whether to transmit at least one measurement signal in at least one subframe on at least one unlicensed carrier to a communication device.

Step 404: Generatea bitmap according to the determination.

Step 406: Transmit the bitmap in at least one DCI on at least one licensed carrier to the communication device.

Step 408: End.

According to the process 40, the network may determine whether to transmit at least one measurement signal in at least one subframe on at least one unlicensed carrier to a communication device (e.g., UE). Then, the network may generatea bitmap according to the determination, and may transmit the bitmap in at least one DCI on at least one licensed carrier to the communication device.That is, whether to the measurement signal (s) is to be transmitted is indicated to the communication device by using the bitmap. Thus, the ambiguity of communication operation(s) related to the measurement signal(s) on the unlicensed carrier is solved. In addition, the network may perform the process 40 to communicate with a communication device performing the process 30, and is not limited herein.

Realization of the process 40 is not limited to the above description.

In one example, the network may configure the same position (e.g., periodicity, offset) for the at least one subframe of the at least one unlicensed carrier. In one example, the network may configure a configuration regarding the position (e.g., periodicity, offset) of the at least one subframe, and the configurationmay be applied to all the at least one unlicensed carrier.In one example, the network may transmit the at least one DCI in at least one common search space of at least one PDCCH of the at least one licensed carrier.In one example, the at least one DCI may be of DCI format 1C. In one example, a length of the at least one DCI and a length of DCI format 1C may be the same. Further, a zero-padding operation may be performed on the at least one DCI so thatthe length of the at least one DCI and the length of the DCI format 1C maybe the same. In one example, the at least one DCI is scrambled by a new RNTI specific for a LAA. In one example, the network may determine whether to transmit the at least one measurement signal according to whether the at least one unlicensed carrier is clear for access.

It should be noted that although the examples are illustrated based on the process 40, to clarify the operations of the base station. The examples can be combined and/or modified arbitrarily according to system requirements and/or design considerations.

Those skilled in the art should readily make combinations, modifications and/or alterations on the abovementioned description and examples. The abovementioned description, steps and/or processes including suggested steps can be realized by means that could be hardware, software, firmware (known as a combination of a hardware device and computer instructions and data that reside as read-only software on the hardware device), an electronic system, or combination thereof. An example of the means may be the communication device 20.

Examples of the hardware may include analog circuit(s), digital circuit (s) and/or mixed circuit (s). For example, the hardware may include ASIC(s), field programmable gate array(s) (FPGA(s)), programmable logic device(s), coupled hardware components or combination thereof. In another example, the hardware may include general-purpose processor(s), microprocessor(s), controller(s), digital signal processor(s) (DSP(s))or combination thereof.

Examples of the software may include set(s) of codes, set(s) of instructions and/or set(s) of functions retained (e.g., stored) in a storage unit, e.g., a computer-readable medium. The computer-readable medium may include SIM, ROM, flash memory, RAM, CD-ROM/DVD-ROM/BD-ROM, magnetic tape, hard disk, optical data storage device, non-volatile storage unit, or combination thereof. The computer-readable medium (e.g., storage unit) may be coupled to at least one processor internally (e.g., integrated) or externally (e.g., separated) . The at least one processor which may include one or more modules may (e.g., be configured to) execute the software in the computer-readable medium.The set(s) of codes, the set(s) of instructions and/or the set(s) of functions may cause the at least one processor, the module(s), the hardware and/or the electronic system to perform the related steps.

Examples of the electronic system may include a system on chip (SoC), system in package (SiP), a computer on module (CoM), a computer program product, an apparatus, a mobile phone, a laptop, a tablet computer, an electronic book or a portable computer system, and the communication device 20.

To sum up, the present invention provides devices (e.g., network, communication device) for handling a measurement signal on an unlicensed band. The network indicates whether the measurement signal is transmitted in a subframe to the communication device by using a bitmap transmitted on a licensed carrier. Thus, the ambiguity of communication operation(s) related to the measurement signal on the unlicensed carrier is solved.

## Claims

1. Acommunication device comprising:
a storage unit for storing instructions of:
receiving a bitmap in at least one downlink (DL) control information (DCI)on at least one licensed carrier from a network; and
determining whether to perform a radio resource management (RRM) measurement, a time/frequency synchronization and/or an automatic gain control(AGC) setting by utilizing at least one measurement signal in at least one subframe on at least one unlicensed carrier according to the bitmap; and
a processing means, coupled to the storage unit, configured to execute the instructions stored in the storage unit.

2. The communication device of claim 1, wherein the communication devicedetermines to perform the RRM measurement, the time/frequency synchronization and/or the AGC setting in one of the at least one subframe on the at least one unlicensed carrier, if a corresponding bit of the bitmap is 1.

3. The communication device of claim 1, wherein the communication device performs a blind detection for a set of the at least one measurement signal in the at least one subframe, if at least one corresponding bit of the bitmap is 1.

4. The communication device of claim 1, wherein a length of the bitmap anda number of the at least one unlicensed carrier are the same.

5. The communication device of claim 1, wherein the at least one unlicensed carrier and the at least one licensed carrier are synchronized.

6. The communication device of claim 1, wherein a length of the at least one DCI and a length of DCI format 1C are the same.

7. The communication device of claim 6, wherein a zero-padding operation is performed on the at least one DCI so thatthe length of the at least one DCI and the length of the DCI format 1C are the same.

8. The communication device of claim 1, wherein the at least one measurement signalcomprises at least one discovery signal.

9. The communication device of claim 1, wherein the at least one subframe is configured by a discovery signal-based measurement time configuration (DMTC) via a radio resource control (RRC) message.

10. The communication device of claim 1, wherein the communication device receives at least one position of the at least one subframe on one of the at least one unlicensed carrier in a RRC signaling.

11. The communication device of claim 10, wherein the at least one position of the at least one subframe is the same for all the at least one unlicensed carrier.

12. A network comprising:
a storage unit for storing instructions of:
determining whether to transmit at least one measurement signal in at least one subframe on at least one unlicensed carrier to a communication device;
generatinga bitmap according to the determination; and
transmitting the bitmap in at least one downlink (DL) control information (DCI)on at least one licensed carrier to the communication device; and
a processing means, coupled to the storage unit, configured to execute the instructions stored in the storage unit.

13. The network of claim 12, wherein a length of the at least one DCI and a length of DCI format 1C are the same.

14. The networkof claim 13, wherein a zero-padding operation is performed on the at least one DCI so thatthe length of the at least one DCI and the length of the DCI format 1C are the same.

15. The network of claim 12, wherein the network determines whether to transmit the at least one measurement signal according to whether the at least one unlicensed carrier is clear for access.
